# EUROPÄISCHE PATENTSCHRIFT

(11) **EP 3 521 668 B1**
(45) Veröffentlichungstag und Bekanntmachung des Hinweises auf die Patenterteilung: **09.03.2022**
(21) Anmeldenummer: 19153642.4
(22) Anmeldetag: 25.01.2019
(51) Int. Cl.: F16J 15/34, F16J 15/46, F16H 57/029

(54) **VORRICHTUNG FÜR OFFSHORE-ARBEITEN MIT EINEM GETRIEBEMOTOR**
DEVICE FOR OFFSHORE WORK WITH A GEARED MOTOR
DISPOSITIF DE TRAVAIL EN MER AVEC UN MOTEUR-RÉDUCTEUR

(30) Priorität: 31.01.2018 DE 202018100532 U
(43) Veröffentlichungstag der Anmeldung: 07.08.2019
(73) Patentinhaber: Schöning GmbH, 44145 Dortmund (DE)
(72) Erfinder: Schöning, Markus, 44141 Dortmund (DE)
(74) Vertreter: Bockhorni & Brüntjen Partnerschaft Patentanwälte mbB

(56) Entgegenhaltungen:
- EP-A1- 0 079 480
- EP-A1- 2 020 539
- GB-A- 2 278 865
- US-A- 5 447 078

## Beschreibung

Die Erfindung betrifft eine Vorrichtung gemäß dem Oberbegriff des Anspruchs 1.

Im Detail befasst sich die Erfindung mit Vorrichtungen für Offshore-Arbeiten unter Einsatz von Werkzeugen, wie Fräsen, Sägen, Bohren und dergleichen, unter Verwendung von Getriebemotoren. Anwendungsfälle dieser Offshore-Arbeiten sind Arbeiten an stationären Ölplattformen, an Windrädern von Windparks, beim Verlegen von Pipelines und Leitungen und dergleichen mehr. Hierbei ist es erforderlich, je nach Bearbeitung Fräs-, Säge- oder Bohrwerkzeuge einzusetzen, so dass unter Wasser beispielsweise Felsgestein, Sandformation und dergleichen bearbeitet werden können, wodurch naturgemäß entsprechender Abraum abgearbeitet, dessen Kleinteilchen mit Wasser eine Emulsion bildet, sodass es zu entsprechenden Schlammbildungen kommen kann.

Kann man bei Flussläufen, Seen und dergleichen Gewässern durch Einbringen von entsprechenden Spundwänden herkömmliche Bearbeitungsvorrichtungen einsetzen, so ist dies im Falle von Offshore-Anwendungsfällen nicht möglich, vielmehr muss je nach Tiefe des Bearbeitungsstandortes entsprechend weit unter Wasser bzw. unter der Meeresoberfläche gearbeitet werden. Hinzu kommt, dass Meerwasser aufgrund seines Salzbestandteils auch außerordentlich aggressiv ist, somit ist die Wahl der richtigen Materialien und Komponenten, welche produktberührt sind, für die Standzeit des Gesamtsystems wichtig.

Deswegen werden derartige Vorrichtungen unter Einsatz von Gleitdichtungen, insbesondere Laufwerksdichtungen, für bewegliche Teile abgedichtet, was aber bei Offshore-Arbeiten und bei Arbeiten unter kontrollierter überflutbaren Wassertiefe von mehr als 5 m in der Regel nicht mehr ausreicht. Dies hat zur Folge, dass je nach Bearbeitungstiefe Partikel und Verunreinigungen sich in die relativ beweglichen Vorrichtungsbestandteile einpressen mit der Folge, dass die Standzeit derartiger Vorrichtungen erheblich reduziert wird. Insbesondere sind die Dichtungen derartiger Vorrichtungen davon betroffen, die auch häufig dem Druck und den aggressiven Medien nicht bei längeren Einsatzzeiten standhalten können.

Aus der US-Patentschrift 5,447,078 ist ein in Wasser eintauchbarer Getriebemotor mit einem flüssigkeitsbeständigen Gehäuse bekannt, der Ringdichtungen für die rotierenden Elemente des Getriebemotors aufweist. Im Besonderen dient der Getriebemotor für den operativen Betrieb von Belüftungseinrichtungen, Pumpen oder Mischeinrichtungen für den Einsatz im Unterwasserbetrieb.

Schließlich ergibt sich aus der EP 2 020 539 A1 eine dynamische Dichtungsanordnung für Getriebe mit Ringdichtungen und einem Druckausgleichsystem, um zu verhindern, dass eine Druckdifferenz zwischen der Umwelt und dem Getriebeinnenraum entsteht.

Aufgabe der Erfindung ist es, eine Vorrichtung für den Offshore-Einsatz insbesondere mit Werkzeugen, wie Fräsen, Sägen, Bohrern und dergleichen, zu schaffen, mit der hohe Standzeiten erreichbar sind, wobei nach einem weiteren Aspekt erreicht werden soll, dass auch unterschiedliche Wassertiefen mit der Vorrichtung ohne großen Aufwand überbrückt werden können.

Diese Aufgabe wird erfindungsgemäß durch die im kennzeichnenden Teil des Anspruchs 1 enthaltenen Merkmale gelöst.

Zweckmäßige Weiterbildungen der Erfindung ergeben sich durch die in den Unteransprüchen angegebenen Merkmale.

Nach Maßgabe der Erfindung wird in der erfindungsgemäßen Vorrichtung für Offshore-Anwendungen mit Bearbeitungswerkzeugen, wie Fräsen, Sägen und Bohrern, mindestens ein Getriebemotor verwendet, an dessen Ausgangswelle das entsprechende Werkzeug angeflanscht bzw. angeschlossen werden kann. Der Getriebemotor, der im Wesentlichen einen Antriebsmotor, das ist zumeist ein Elektromotor, und ein Getriebe umfasst, ist nach Maßgabe der Erfindung für die Rüstung für den Unterwassereinsatz im Offshore-Bereich mit einem gegen Wasser- und Schlammzutritt abgekapselten Gehäuse ummantelt, wobei Antrieb und Getriebe in einem Gehäuse oder der Antrieb und das Getriebe jeweils in einem eigenen Gehäuseelement untergebracht ist. Diese Gehäuse sind mehrteilig aufgebaut, in der Regel zweiteilig, um die Bestandteile des Motors und auch des Getriebes entsprechend unterzubringen. Die Gehäuseteile werden hierbei passend längs ihrer Fügeflächen zusammengesetzt und üblicherweise miteinander befestigt, etwa durch Verschraubung. Nach Maßgabe der Erfindung sind im Bereich der Verbindungs- bzw. Fügeflächen der Gehäuseteile zum Zwecke der Abkapselung nach außen Dichtmittel, insbesondere Dichtringe oder flachprofilierte Dichtelemente, vorgesehen sind, mit denen eine wasserdichte Abdichtung des Innenraums gegenüber dem Meerwasser auch unter Berücksichtigung der Druckverhältnisse in entsprechenden Tiefen gewährleistet ist. Wasserdichte Abdichtung im Sinne der vorliegenden Anmeldung bedeutet, dass der Innenraum des Gehäuses mit Antrieb und Getriebe auch in entsprechenden Wassertiefen sicher gegen Wasserzutritt und auch Zutritt von Fremdkörpern, Schlamm und dergleichen Emulsionen geschützt ist. Nach Maßgabe der Erfindung sind die gegenüber dem Gehäuse antriebseitig und abtriebseitig rotierenden Flächen, insbesondere Wellen, gegenüber dem Gehäuse durch unter Druck gesetzte Ringdichtungen abgedichtet. Diese Druckeinstellung ist wesentlich, weil infolge der Druckvariabilität Druckunterschiede zwischen der Umgebung und dem Inneren des den Antrieb und das Getriebe aufnehmenden Gehäuses ausgeglichen werden können. Nach einem weiteren Aspekt werden für die Gehäuse-Getriebe und/oder Antriebskomponenten korrosionsbeständige Werkstoffe verwendet, etwa rostfreier Stahl und hochlegierte Stähle und Metalle.

Bei einer Rüstung von Getriebemotoren entsprechend den oben genannten Maßnahmen ist es hierbei möglich, entsprechende Standard-Getriebemotoren zu verwenden, die in der Regel aus einem Elektromotor und einem geeigneten Getriebe aufgebaut sind, wobei alle Arten von Getrieben in Anwendung kommen können, wie Winkelgetriebe, Stirnradgetriebe, Planetengetriebe mit Hohlwelle oder mit Vollwelle, und zwar je nach entsprechendem Anwendungsfall.

Wichtig ist hierbei, dass aufgrund einer solchen Rüstung von Standard-Getriebemotoren trotz Druckunterschieden beim Einsatz in entsprechenden Tiefen Unterwasser im Offshore-Bereich einer solchen Abdichtung der Einsatz derartiger Getriebemotoren auf lange Dauer möglich ist, und zwar auch unter Berücksichtigung des Umstands, dass die Laufwerksteile unter Wasser betrieben werden und starken Verschmutzungen aufgrund der Bearbeitung durch Fräsen, Bohren, Sägen und dergleichen unterliegen.

Nach Maßgabe der Erfindung werden die unter Druck gesetzten Ringdichtungen für die rotierenden Flächen, insbesondere Wellen, über eine Vorkammer unter Druck gesetzt, und zwar vorzugsweise durch ein hydraulisches Druckmittel, wie etwa Öl, oder eines vergleichbaren hochviskosen druckbeaufschlagten Vorkammersperrmediums, insbesondere Schmierstoffe.

Die Vorkammer für den Druckausgleich ist erfindungsgemäß an der wellenfernen, also von den rotierenden flächenfernen Seite der Laufwerks-, insbesondere Ringdichtung vorgesehen und vorzugsweise durch eine spaltförmige Ringkammer ausgebildet. Spaltförmig deswegen, weil hierdurch die Vorkammer ohne Einbuße ihrer Funktion vom Volumen her enger ausgebildet sein kann.

Erfindungsgemäß ist die Vorkammer durch Druckmittelzufuhr auf einen Druck einstellbar, der abhängig ist von der Arbeitstiefe, in welcher das Bearbeitungswerkzeug, wie Fräse, Bohrer, Säge und dergleichen, verwendet werden soll, um die Druckdifferenzen gegenüber dem Wasserdruck auszugleichen.

Nach Maßgabe der Erfindung wird hierbei die Vorkammer über eine Druckmittelzuführleitung mit Druckmittel von einer außerhalb des Getriebemotors vorgesehenen Druckquelle gespeist, was es ermöglicht, dass von extern her eine variable Druckeinstellung in der Vorkammer durch entsprechende Druckmittelzufuhr möglich ist. Dadurch ergibt sich eine variable und dynamische Druckeinstellung abhängig von entsprechenden Arbeitstiefen des Getriebemotors.

Die Ringdichtung lässt sich zweckmäßigerweise durch mechanische Laufwerksdichtungen realisieren. In besonderer Weise geeignet sind Laufwerksdichtungen in Form von zwei benachbarten und funktional zusammengesetzten, metallisch eingekapselten Dichtungen, von denen zweckmäßigerweise jede zweigliedrig aufgebaut ist, und zwar zweigliedrig in funktionaler Hinsicht, nämlich einen Sitzring und einen radial außerhalb des Sitzrings vorgesehenen und im Sitzring angeordneten Dichtring, der Dichtring hat die Funktion das System vorzuspannen und dynamisch abzudichten . Hierbei ist es möglich, die beiden benachbarten Dichtringe einstückig oder zweiteilig auszuführen. Metallische Einkapselung bedeutet, dass die zusammenwirkenden Dichtringe sowohl in einteiliger wie auch in zweiteiliger Ausführungsform in einem Metallgehäuse eingekammert sind.

Zweckmäßig ist hierbei, dass Sitzring und insbesondere Dichtung durch ein verschleißfestes Elastomer gebildet sind.

Nach Maßgabe der Erfindung wird der Spaltraum, also die Vorkammer, zum außen liegenden Medium schwimmend gelagert und mittels eines nicht verbundenen Schleißrings bzw. Dichtrings, welcher hohe Druckdifferenzen kompensiert, verschlossen. Dieser Spaltraum kann mit entsprechendem Druckmittel, etwa Öl oder einem pastenförmigen Schmierstoff, druckbeaufschlagt aufgefüllt werden. Die Ausnutzung des Spaltraumes mit der aufgefüllten Flüssigkeit führt dazu, dass sich beschädigte Laufwerksteile nicht einarbeiten können. Ein Durchtritt von feinen Partikeln wird durch die umschließende Schmierstoffmenge ausgeschlossen und durch den erzeugten zusätzlichen Druckunterschied findet kein Verschleiß der Dichtung statt. Weiterhin kann durch gezielt gesteuerte Druckdifferenzen, welche nach dem Einsatzort, insbesondere der Einsatztiefe, definiert werden, das gesamte System ausgleichend betrieben werden.

Die Fügeflächen des jeweils mehrteiligen, insbesondere zweiteiligen, Gehäuses können zweckmäßigerweise mit an die aufzunehmenden Dichtungen angepassten Nuten ausgebildet sein, in welche die Dichtringe entsprechend sicher, sozusagen teilgekammert, einsetzbar sind, wobei die Dichtringe, insbesondere O-Ringe, über die jeweiligen Fügeflächen vorstehen, so dass die Dichtung beim Zusammensetzen der Befestigung der entsprechenden Gehäuseteile, entweder durch Schrauben in den Flanschbereichen, und der Erzeugung von Rückstellkräften deponiert und damit vorgespannt sind. Dadurch ergibt sich ein selbsttätiger Ausgleich von Druckdifferenzen. Alternativ können auch flachprofilierte Dichtungselemente verwendet werden. Zweckgemäß ist auch die Fügefläche über mindestens eine Schulter, insbesondere umlaufende Schultern im Innenbereich der Fügeflächen abzusetzen, und damit eine Labyrinthdichtung zu bilden, was zusammen zweckmäßigerweise mit den vorbeschriebenen Dichtringen und Dichtelementen erfolgen kann.

Nachfolgend werden Ausführungsbeispiele der Erfindung anhand der Figuren beschrieben. Darin zeigen
- Fig. 1: eine perspektivische Ansicht eines Getriebemotors
- Fig. 2: eine Seitenansicht des Getriebemotors nach der Fig. 1
- Fig. 3: einen Teilschnitt längs der Schnittlinie B-B in Fig. 2
- Fig. 4: eine geeignete Ausführungsform einer Laufwerksdichtung sowie
- Fig. 5: eine weitere alternative Ausführungsform einer geeigneten Laufwerksdichtung und
- Figur 6: eine Schnittansicht durch ein weiteres Ausführungsbeispiel eines nicht beanspruchtenGetriebemotors in Schnittansicht
- Figur 7: eine vergrößerte Darstellung der durch eingeschriebenen Kreis in Figur 6 gekennzeichneten Einzelheit
- Figur 8: eine Teilschnittansicht in vergrößerter Darstellung einer abgewandelten nicht beanspruchtenAusführungsform alternativ zur Darstellung in Figur 7,
- Figur 9: einen Teilschnitt G gemäß Figur 6 in vergrößerter Darstellung zur dichten Verbindung der Gehäuseteile des Getriebemotors, sowie
- Figur 10: einen Teilschnitt durch einen alternativen nicht beanspruchten Getriebeaufbau.

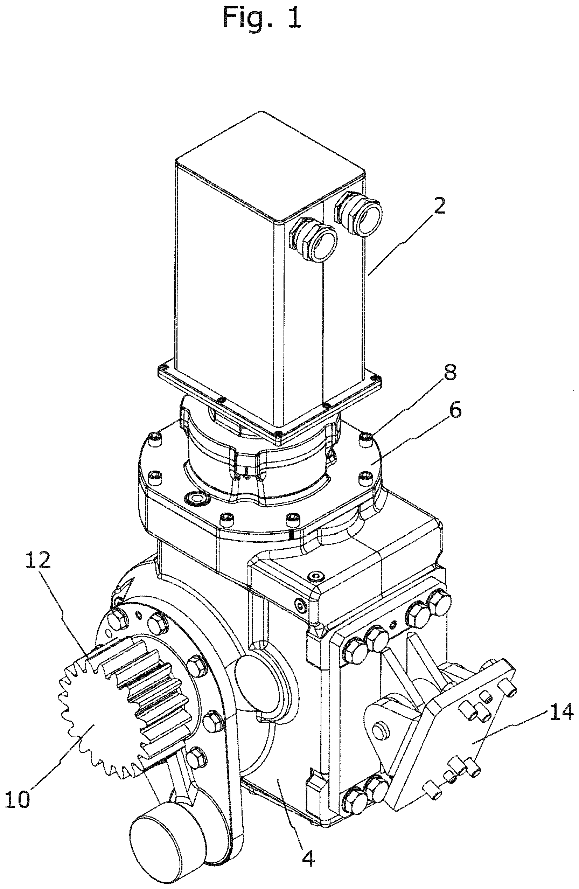

Fig. 1 zeigt rein beispielhaft einen für den erfindungsgemäßen Anwendungsbereich geeigneten Getriebemotor, wobei mit Rüstung gemäß der Erfindung im Prinzip jeder Standard-Getriebemotor verwendbar ist und zwar unabhängig vom speziellen Antrieb und vom speziellen Aufbau des Getriebes, so dass alle möglichen Getriebe, wie Planetengetriebe, Winkelgetriebe und dergleichen, für die Erfindung verwendet werden können. Insoweit bedarf es diesbezüglich keiner genauen Beschreibung.

In Fig. 1 sieht man das Gehäuseelement 2 für den darin untergebrachten Antrieb, wobei hierfür ein Elektromotor geeignet ist. Mit 4 ist das das Getriebe aufnehmende Gehäuseelement bezeichnet. Insoweit ist der Getriebemotor sozusagen in zwei Gehäuseelementen 2, 4 aufgenommen, die über Flanschplatten 6 miteinander verbunden sind, hier durch eine Verschraubung 8. Bedarfsweise können Motor und Getriebe auch in einem gemeinsamen Gehäuse untergebracht sein. Die Gehäuse sind zweckmäßigerweise mehrgeteilt, insbesondere zweigeteilt, um die Bauelemente Antrieb und Getriebe leicht unterbringen zu können.

Aus Fig. 1 ist mit 10 die Ausgangs- und damit Abtriebswelle ersichtlich, in welcher das Bearbeitungswerkzeug in an sich bekannter Weise angeschlossen ist. Zum Zwecke der Drehübertragung auf das Werkzeug ist die Abtriebswelle 10 mit einem Ritzel 12 bestückt, wobei doch auch jede andere geeignete Verbindung möglich ist, etwa über eine Feder-Nutverbindung und dergleichen, was jedoch nicht Bestandteil der Erfindung ist. Mit 14 sind lediglich Flanschplatten für die Befestigung des Getriebemotors an anderen Baueinheiten dargestellt.

Es ist bekannt und muss deswegen hier nicht gesondert beschrieben werden, dass der im Gehäuse 2 untergebrachte Antriebsmotor über eine Ausgangswelle, die durch die Flanschplatte 6 führt, mit dem im Gehäuse 4 aufgenommenen Getriebe gekoppelt ist, wobei über das Getriebe eine entsprechende Unter- oder Übersetzung der Drehzahl stattfindet, um das an die abtriebseitige Welle 10 angeordnete Werkzeug drehend mit gewünschten Drehzahlen zum Zwecke der Bearbeitung zu betreiben.

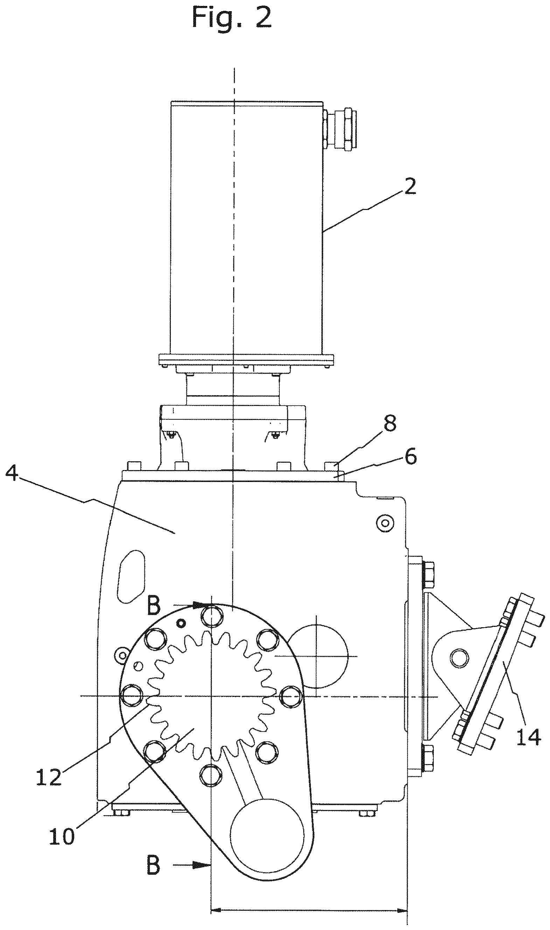

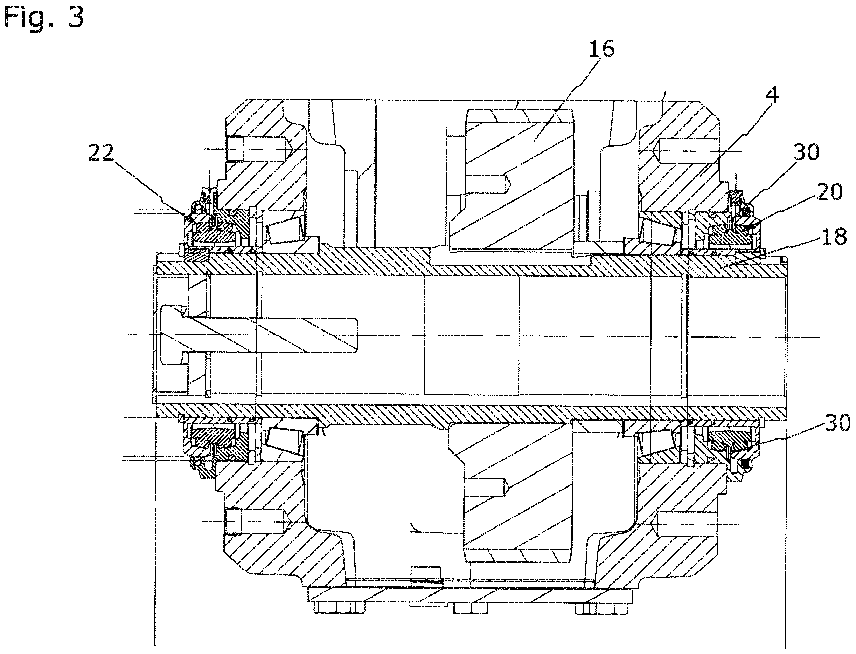

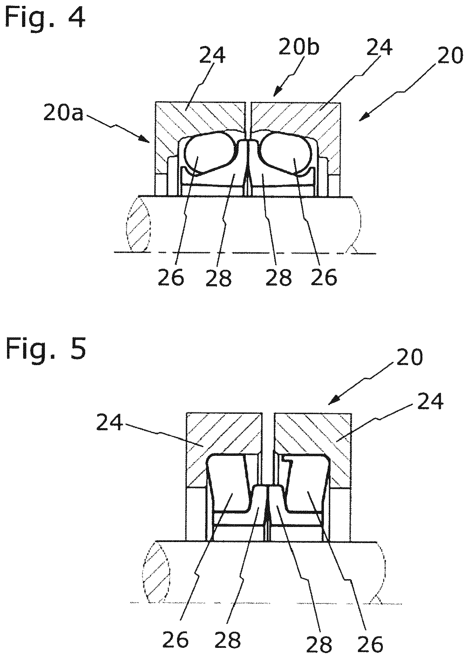

Fig. 3 zeigt einen Teilschnitt längs der Linie B-B in Fig. 2, wobei aus Fig. 3 das Getriebegehäuse 4 ersichtlich ist. Mit 16 ist ein Teil des Getriebes bezeichnet, welches auf der hier als Hohlwelle ausgebildeten Welle 18 sitzt, die an der rechten Seite aus dem Gehäuse 4 austritt, wobei dort dann das Befestigungswerkzeug angeschlossen wird. An beiden Seiten der Welle 18 befinden sich zur Rüstung des Getriebemotors für den Unterwassereinsatz im Offshore-Bereich Laufwerksdichtungen 20, 22, wobei Ausführungsformen derartiger Laufwerksdichtungen, die für den erfindungsgemäßen Einsatz geeignet sind, beispielsweise anhand der Fig. 4 und 5 dargestellt sind.

Wie aus Fig. 4 hervorgeht, sind, was aber nur als beispielhaft angesehen werden muss, sind Laufwerksdichtungen 20, 22 geeignet, die unter entsprechenden Druck gesetzt werden können. Gemäß Fig. 4 sind zwei im Prinzip identische Metall-Dichtringe 20a, 20b vorgesehen, die eng nebeneinander auf Kontakt zueinander angeordnet sind und funktional als eine Laufwerksdichtung dienen. Die Dichtmittel sind hierbei jeweils in einem metallischen Gehäuse 24 untergebracht und jeder metallische Dichtring 20a, 20b weist einen O-Ring 26 auf, der jeweils auf einem Sitzring 28 sitzt bzw. in einer entsprechenden Ausnehmung eingebettet ist, jedoch über den Sitzring vorsteht. Die Sitzringe 28 sind auf metallischen, insbesondere gehärteten Ringen 29 angeordnet. Sitzring und O-Ring sind aus einem entsprechenden geeigneten Material, etwa verschleißfesten Elastomer gebildet. Die in zwei separaten Gehäusen vorhandenen identischen Metall-Dichtringe weisen geläppte Laufflächen auf und sind hierüber gegenüber verpresst und über die O-Ringe 26 zentriert. Eine Hälfte der mechanischen Laufwerksdichtung, etwa die Hälfte 20a, verhält sich in der Anwendung statisch, während die andere Hälfte, hier beispielsweise 20b, an den Gegenlaufflächen rotiert und gesamtdynamisch befedert wird.

Die Laufwerksdichtung nach der Fig. 5 unterscheidet sich im Prinzip nur durch die Formgebung der jeweiligen Dichtelemente, wobei anstelle von O-Ringen 26 nunmehr Ringe mit einem trapezförmigen Querschnitt als sekundäres Dichtelement verwendet sind.

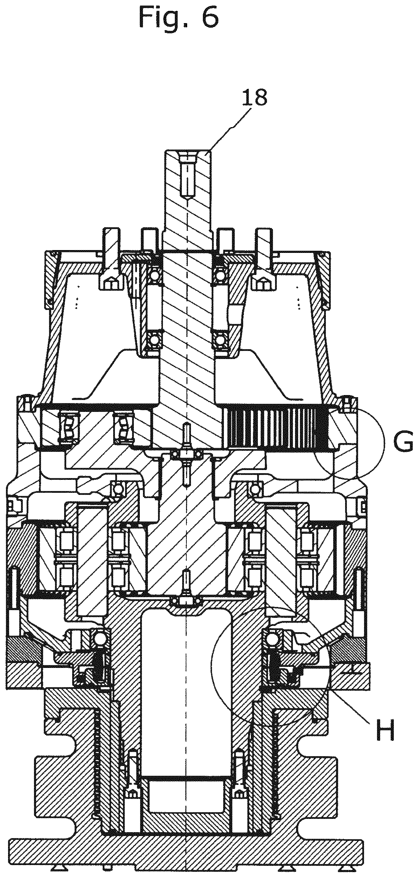

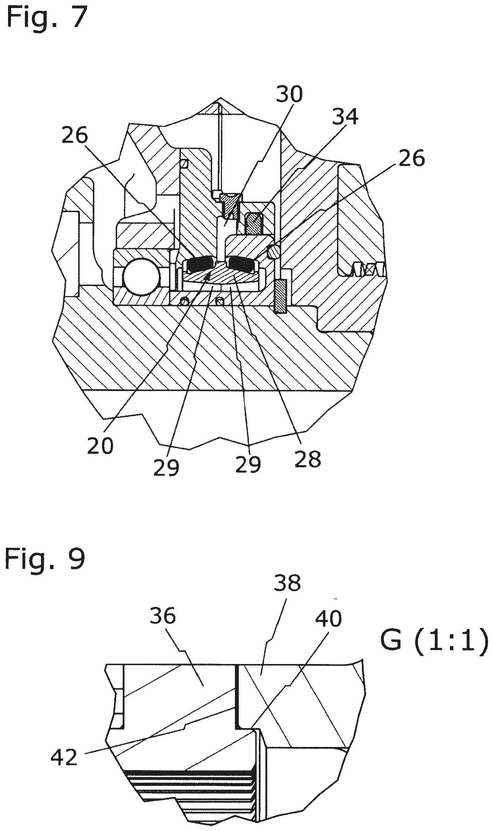

Figur 6 zeigt eine weitere nicht beanspruchte Ausführungsform eines Standard-Getriebemotos, der allerdings für den beschriebenen speziellen Anwendungsfall gerüstet ist, wobei der Getriebemotor im Schnitt dargestellt ist. Die Antriebswelle 18 ist hierbei als Welle mit Vollprofil dargestellt. Figur 7 zeigt die in Figur 6 mit Kreis H doppelt dargestellte Laufwerksdichtung in vergrößerter Darstellung mit der als Ringspalt ausgebildeten Vorkammer 30 und der zweigliedrigen Ringdichtung 20 hier mit einem gehärteten, vorzugsweise metallischen Gleitring 29 als Laufring und zwei Dichtringen aus Elastomer mit dem Bezugszeichen 26. Die Vorkammer 30 ist durch einen Stopfen 32 abgedichtet, welcher das Füllventil für die druckbeaufschlagte Vorkammer bildet. Ferner ist aus Figur 7 ein druckfester ausgebildeter Schleißring 34 ersichtlich, der als Rotationsdichtung dient.

In vorteilhafter Ausbildung ist der Spaltraum bzw. die Vorkammer 30 zum auslegenden Medium schwimmend gelagert und mittels des nicht verbundenen Schleißringes 34 verschlossen, der hohe Druckdifferenzen kompensiert. Zweckmäßig kann dieser Spaltraum mit einem passförmigen Schmierstoff oder einem anderen geeigneten Druckmittel, etwa Hydrauliköl, druckbeaufschlagt gefüllt werden. Die Ausnutzung des Spaltraumes bzw. der Vorkammer mit dem Schmierstoff bzw. Druckmittel führt dazu, dass sich beschädigte Laufwerksteile nicht einarbeiten können. Ein Durchtritt von feinen Partikeln wird durch die umschließende Schmierstoffmenge ausgeschlossen und durch den erzeugten zusätzlichen Druckunterschied findet kein Verschleiß der Dichtung statt. Ferner kann durch gezielt gesteuerte Druckdifferenzen, welche nach dem Einsatzort, also der gewünschten Einsatztiefe, definiert werden, das Gesamtsystem ausgleichend betrieben werden.

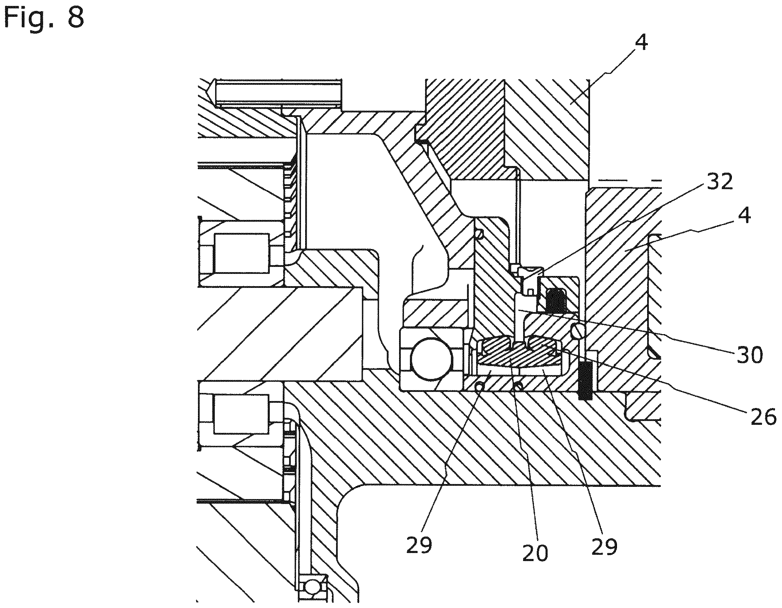

Figur 8 zeigt eine nicht beanspruchte alternative Ausgestaltung des Getriebes nach Figur 6 gegenüber der Ausführungsform nach Figur 7, wobei nur ein Teilschnitt ähnlich Figur 7 dargestellt ist. Aus der Fig. 8, die ein etwas abgewandeltes Getriebe zeigt, geht recht deutlich die spaltförmige Vorkammer 30 hervor, die ringförmig umlaufend als Spalt ausgebildet ist und in Wirkverbindung mit dem hier einteilig ausgebildeten Dichtring steht. Diese Vorkammer 30 wird über die mit einem Stopfen 32 verschlossene Öffnung mit geeignetem Druckmedium, also etwa pastöser Schmierstoff oder Hydrauliköl mit geeigneter Viskosität, gefüllt, wonach dann der Stopfen wieder aufgebracht wird. Dadurch kann die Laufwerksdichtung von außen her auf einen geeigneten Druck gesetzt werden, um je nach Arbeitstiefe unter Wasser entsprechende Druckdifferenzen auszugleichen.

Gemäß der Erfindung, in einer alternativen, hier jedoch nicht dargestellten Abwandlung erfolgt eine dynamische Befüllung der Vorkammer und damit eine variable Ausbildung der Druckverhältnisse in der Vorkammer 30 je nach Arbeitstiefe, indem über eine Druckmittelzufuhrleitung die Vorkammer 30 mit einer entsprechenden und hier nicht dargestellten Druckquelle verbunden ist, so dass von extern her eine dynamische Regulierung durch entsprechende Zufuhr von Druckmittel in die Vorkammer 30 erfolgen kann.

Figur 9 zeigt ein geeignetes Ausführungsbeispiel einer Abdichtung der Fügeflächen der Gehäuseteile zwecks Abkapslung des Inneren des Getriebemotors. Die Gehäuseteile sind mit 36 und 38 bezeichnet. Ersichtlich weist die Fügefläche eine Schulter 40 auf, was im Rahmen der Erfindung zweckmäßig ist. Verwendet wird hierbei ein flachprofiliertes Dichtungselement, welches in Figur 9 fettgedruckt dargestellt und mit dem Bezugszeichen 42 gekennzeichnet ist. Dieses Dichtungselement ist so gestaltet, dass es druck- und stoßfest sowie wasserresistent ist. Ferner weißt diese Dichtung eine hohe Temperaturbeständigkeit sowie zweckmäßigerweise auch eine Beständigkeit gegenüber Laugen und Säuren auf. Diese Gehäusedichtung ist im Rahmen der Erfindung für eine dichte Abkapselung des Gehäuses sehr vorteilhaft.

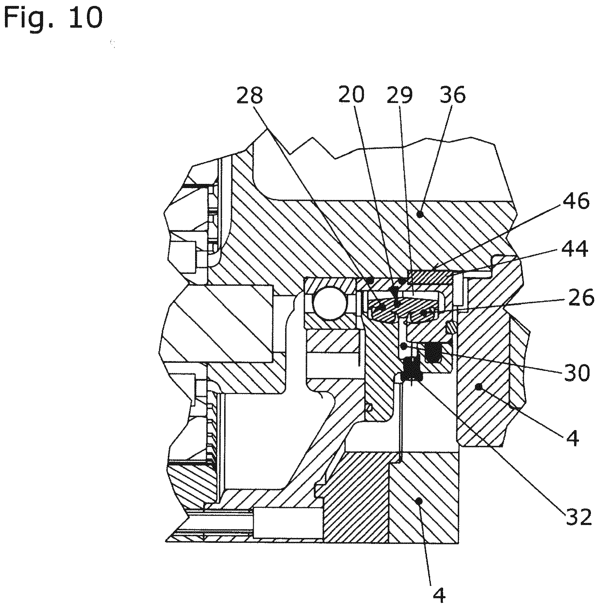

Fig. 10 zeigt einen Teilschnitt durch einen alternativen nicht beanspruchten Getriebemotoraufbau ähnlich den Figuren 7 und 8 mit einem einteiligen Aufbau aus Dichtringen 26 und Sitzring 28 mit gehärteten Laufringen 29. In dieser Ausführungsform ist die Laufringrichtung 20 radial außen durch mindestens eine Passfeder 44 in einer Gehäusenut 46 mit dem Gehäuseteil 36 verbunden.

## Patentansprüche

1. Offshore-Bearbeitungsvorrichtung für Gesteins- und Sandformationen durch Bearbeitungswerkzeuge, wie Fräser, Sägen, Bohrer und dergleichen, mit einem Getriebemotor umfassend einen Antrieb, ein mit dem Antrieb gekoppeltes Getriebe und mindestens ein mehrteiliges Gehäuse für die Aufnahme von Antrieb und Getriebe, wobei das Getriebe mindestens eine durch das Gehäuse nach außen führende Welle, insbesondere Abtriebswelle (18), aufweist, an der das Bearbeitungswerkzeug außerhalb des Gehäuses (4) anschließbar ist, wobei der Getriebemotor durch eine wasserdicht ausgelegte Gehäuseabkapselung für den Unterwasserbetrieb gerüstet ist und die Gehäuseteile längs ihrer Fügeflächen durch Dichtmittel und die am Gehäuse antriebseitigen und abtriebseitigen rotierenden Flächen, insbesondere Wellen (18), gegenüber dem Gehäuse (4) durch Ringdichtungen (20, 22) abgedichtet sind, welche über eine Vorkammer (30) unter Druck setzbar sind, die jeweils an der wellenfernen Seite der Ringdichtung (20, 22) anschließt, wobei die Vorkammer (30) durch Druckmittelzufuhr auf einen Druck einstellbar ist, durch den abhängig von der vorgegebenen Arbeitstiefe Druckdifferenzen gegenüber dem Wasserdruck außerhalb des Gehäuses ausgeglichen sind,
**dadurch gekennzeichnet, dass** die Offshore-Bearbeitungsvorrichtung eine Druckmittelzuführung und eine Druckluftquelle umfasst, wobei die Vorkammer (30) über die Druckmittelzuführleitung mit Druckmittel von der außerhalb des Getriebemotors vorgesehenen Druckluftquelle gespeist wird, so dass von extern eine variable und dynamische Druckeinstellung durch entsprechende Druckmittelzufuhr zur Vorkammer oder zum Getriebeinnenraum in Anpassung an unterschiedliche Einsatztiefen ermöglicht ist.

2. Vorrichtung nach Anspruch 1,
**dadurch gekennzeichnet, dass**
ein hydraulisches Druckmittel, wie Öl oder Schmierstoff für die Ringdichtung verwendet ist.

3. Vorrichtung nach Anspruch 2,
**dadurch gekennzeichnet, dass**
die Vorkammer (30) durch eine spaltförmige Ringkammer gebildet ist.

4. Vorrichtung nach einem der vorhergehenden Ansprüche,
**dadurch gekennzeichnet, dass**
die Ringdichtungen (20, 22) durch mechanische Laufwerksdichtungen gebildet sind.

5. Vorrichtung nach Anspruch 4,
**dadurch gekennzeichnet, dass**
die Laufwerksdichtung durch zwei benachbarte und funktional zusammengesetzte, metallisch eingekapselte Dichtungen gebildet sind, von denen jede zweigliedrig aufgebaut ist, nämlich einen Sitzring (28) und einen radial außerhalb angeordneten und im Sitzring (28) aufgenommenen Dichtring (26).

6. Vorrichtung nach Anspruch 5,
**dadurch gekennzeichnet, dass**
Sitzring (28) und Dichtring (26) einstückig oder zweiteilig aufgebaut und dass vorzugsweise der Sitzring aus einem metallischen Werkstoff und der Dichtring durch einen verschleißfesten Elastomer oder beide durch einen geeigneten Elastomerwerkstoff gebildet sind.

7. Vorrichtung nach einem der vorhergehenden Ansprüche,
**dadurch gekennzeichnet, dass**
die Fügeflächen der zusammengesetzten Gehäuseteile über vorgespannte Dichtringe als Dichtmittel abgedichtet sind.

8. Vorrichtung nach Anspruch 7,
**dadurch gekennzeichnet, dass**
die Fügeflächen mit zu den aufzunehmenden Dichtringen komplementäre oder querschnittsangepasste Nuten aufweisen, in welchen die Dichtringe derart eingesetzt sind, dass die Dichtringe über die jeweiligen Fügeflächen hervorstehen, so dass die Dichtringe beim Zusammensetzen und Befestigen der entsprechenden Gehäuseteile zur Bildung des Gehäuses (4) und der Erzeugung von elastischen Rückstellkräften deponiert und damit vorgespannt sind.

9. Vorrichtung nach Anspruch 1,
**dadurch gekennzeichnet, dass**
flachprofilierte Dichtungselemente als Dichtmittel für die Abdichtung der Fügeflächen vorgesehen sind.

10. Vorrichtung nach einem der Ansprüche 7 bis 9,
**dadurch gekennzeichnet, dass**
die Fügeflächen zumindest über eine durchgehende Schulter zueinander versetzt sind.

11. Vorrichtung nach einem der Ansprüche 1 bis 10,
**dadurch gekennzeichnet, dass**
der Gehäuseinnenraum derart unter Druck durch Hydraulikmittel gesetzt ist, dass ein Druckausgleich entsprechend der Einsatztiefe Unterwasser erfolgt.

## Claims

1. Offshore machining device for rock and sand formations using machining tools such as mills, saws, drills and the like, with a geared motor comprising a drive, a transmission coupled to the drive, and at least one multipart housing for accommodating the drive and transmission, the transmission having at least one shaft, in particular driven shaft (18), which leads outwards through the housing and to which the machining tool can be attached outside the housing (4), the transmission motor being fitted with a housing encapsulation, configured to be watertight, for underwater operation, and the housing parts being sealed off along their joining faces by sealing means, and the faces, in particular shafts (18), which rotate on the drive side and driven side of the housing being sealed off from the housing (4) by annular seals (20, 22), which can be placed under pressure by way of an upstream chamber (30), which in each case connects to the face of the annular seal (20, 22) remote from the shaft, the upstream chamber (30) being adjustable, by supplying pressure medium, to a pressure which compensates pressure differences with respect to the water pressure outside the housing as a function of the prescribed operating depth,
**characterised in that**
the offshore machining device comprises a pressure medium supply and a pressurised air source, the upstream chamber (30) being fed, via the pressure medium supply line, with pressure medium from the pressurised air source provided outside the geared motor, in such a way that variable, dynamic pressure adjustment is made possible from the outside by supplying pressure medium to the upstream chamber or to the transmission interior in a corresponding manner in adaptation to different usage depths.

2. Device according to claim 1,
**characterised in that**
a hydraulic pressure medium such as oil or lubricant is used for the annular seal.

3. Device according to claim 2,
**characterised in that**
the upstream chamber (30) is formed by an annular chamber in the form of a slot.

4. Device according to any of the preceding claims,
**characterised in that**
the annular seals (20, 22) are formed by mechanical running gear seals.

5. Device according to claim 4,
**characterised in that**
the running gear seals are formed by two adjacent, functionally assembled, metal-encapsulated seals, each of which is formed in two members, namely a seat ring (28) and a sealing ring (26) which is arranged radially to the outside and accommodated in the seat ring (28).

6. Device according to claim 5,
**characterised in that**
the seat ring (28) and sealing ring (26) are constructed in one piece or in two parts and **in that**, preferably, the seat ring is formed of a metal material and the sealing ring is formed of a wear-resistant elastomer or both are formed by a suitable elastomer material.

7. Device according to the preceding claims,
**characterised in that**
the joining faces of the assembled housing parts are sealed off by way of biased sealing rings as sealing means.

8. Device according to claim 7,
**characterised in that**
the joining faces have grooves which are complementary to or adapted in cross section to the sealing rings to be received and into which the sealing rings are inserted in such a way that the sealing rings protrude over the associated joining faces, in such a way that, when the corresponding housing parts are assembled and fixed to form the housing (4) and resilient restoration forces are generated, the sealing rings are deposited and thus biased.

9. Device according to claim 1,
**characterised in that**
flat-profiled sealing elements are provided as sealing means for sealing the joining faces.

10. Device according to any of claims 7 to 9,
**characterised in that**
the joining faces are offset with respect to one another, at least by way of a continuous shoulder.

11. Device according to any of claims 1 to 10,
**characterised in that**
the housing interior is placed under pressure by hydraulic medium in such a way that pressure compensation occurs in a manner corresponding to the usage depth underwater.

## Revendications

1. Dispositif de travail en mer pour des formations rocheuses et sablonneuses au moyen d'outils de travail, tels que des fraises, des scies, des forets et analogues, avec un motoréducteur comprenant un entraînement, un réducteur couplé à l'entraînement et au moins un carter en plusieurs parties pour recevoir l'entraînement et le réducteur, le réducteur présentant au moins un arbre, en particulier un arbre de sortie (18), qui passe vers l'extérieur à travers le carter et auquel l'outil de travail peut être raccordé à l'extérieur du carter (4), le motoréducteur étant équipé pour un fonctionnement sous l'eau au moyen d'une encapsulation de carter conçue pour être étanche à l'eau et les parties du carter étant rendues étanches le long de leurs surfaces de jonction par des moyens d'étanchéité et les surfaces rotatives côté entraînement et côté sortie du carter, en particulier les arbres (18), étant rendues étanches par rapport au carter (4) par des joints d'étanchéité annulaires (20, 22) qui peut être mis sous pression par l'intermédiaire d'une préchambre (30) qui se raccorde à chaque fois au côté du joint d'étanchéité annulaire (20, 22) éloigné de l'arbre, la préchambre (30) étant réglable par l'amenée de fluide sous pression à une pression au moyen de laquelle, en fonction de la profondeur de travail prédéfinie, des différences de pression par rapport à la pression de l'eau à l'extérieur du carter sont compensées,
**caractérisé en ce**
**que** le dispositif de travail en mer comprend une amenée de fluide sous pression et une source d'air comprimé, la préchambre (30) étant alimentée en fluide sous pression à partir de la source d'air comprimé prévue à l'extérieur du motoréducteur par l'intermédiaire de la ligne d'amenée de fluide sous pression, de sorte qu'un réglage de pression variable et dynamique est rendu possible depuis l'extérieur par une amenée correspondante de fluide sous pression à la préchambre ou à l'intérieur du réducteur pour une adaptation à différentes profondeurs d'utilisation.

2. Dispositif selon la revendication 1,
**caractérisé en ce**
**qu'**un fluide hydraulique sous pression, tel qu'une huile ou un lubrifiant, est utilisé pour le joint d'étanchéité annulaire.

3. Dispositif selon la revendication 2,
**caractérisé en ce**
**que** la préchambre (30) est formée par une chambre annulaire en forme de fente.

4. Dispositif selon l'une des revendications précédentes,
**caractérisé en ce**
**que** les joints d'étanchéité annulaires (20, 22) sont formés par des joints d'étanchéité mécaniques pour mécanisme de roulement.

5. Dispositif selon la revendication 4,
**caractérisé en ce**
**que** le joint d'étanchéité pour mécanisme de roulement est formé par deux joints d'étanchéité adjacents et assemblés fonctionnellement, encapsulés dans du métal, dont chacun est réalisé en deux parties, à savoir une bague de siège (28) et une bague d'étanchéité (26) disposée radialement à l'extérieur et reçue dans la bague de siège (28).

6. Dispositif selon la revendication 5,
**caractérisé en ce**
**que** la bague de siège (28) et la bague d'étanchéité (26) sont réalisées d'une seule pièce ou en deux parties et que, de préférence, la bague de siège est formée d'un matériau métallique et la bague d'étanchéité est formée d'un élastomère résistant à l'usure ou les deux sont formées d'un matériau élastomère approprié.

7. Dispositif selon l'une des revendications précédentes,
**caractérisé en ce**
**que** les surfaces de jonction des parties de carter assemblées sont rendues étanches au moyen de bagues d'étanchéité précontraintes servant de moyens d'étanchéité.

8. Dispositif selon la revendication 7,
**caractérisé en ce**
**que** les surfaces de jonction présentent des rainures complémentaires aux bagues d'étanchéité à recevoir ou adaptées à leur section transversale, dans lesquelles les bagues d'étanchéité sont insérées de telle sorte que les bagues d'étanchéité dépassent des surfaces de jonction respectives, de sorte que les bagues d'étanchéité sont déposées et donc précontraintes lors de l'assemblage et de la fixation des parties de carter correspondantes pour former le carter (4) et pour générer des forces de rappel élastiques.

9. Dispositif selon la revendication 1,
**caractérisé en ce**
**que** des éléments d'étanchéité profilés plats sont prévus comme moyens d'étanchéité pour rendre les surfaces de jonction étanches.

10. Dispositif selon l'une des revendications 7 à 9,
**caractérisé en ce**
**que** les surfaces de jonction sont décalées l'une par rapport à l'autre par au moins un épaulement continu.

11. Dispositif selon l'une des revendications 1 à 10,
**caractérisé en ce**
**que** l'intérieur du carter est mis sous pression par du fluide hydraulique de telle sorte qu'il se produise sous l'eau une égalisation de pression en fonction de la profondeur d'utilisation.
